Europäisches Patentamt

European Patent Office

Office européen des brevets

(19)

(11) Numéro de publication: **0 299 826**
**A1**

## (12) DEMANDE DE BREVET EUROPEEN

(21) Numéro de dépôt: **88401645.2**

(22) Date de dépôt: **28.06.88**

(51) Int. Cl.⁴: **G 07 F 7/10**
G 07 F 7/08

(30) Priorité: **10.07.87 FR 8709794**

(43) Date de publication de la demande:
**18.01.89 Bulletin 89/03**

(84) Etats contractants désignés:
**BE CH DE ES FR GB IT LI NL SE**

(71) Demandeur: **SCHLUMBERGER INDUSTRIES**
**50, avenue Jean Jaurès**
**F-92120 Montrouge (FR)**

(72) Inventeur: **Barakai, Simon**
**3, Allée des Tilleuls**
**F-78570 Andrésy (FR)**

(74) Mandataire: **Dronne, Guy**
**SCHLUMBERGER INDUSTRIES Groupe Transactions**
**Electronique 50, avenue Jean Jaurès**
**F-92120 Montrouge (FR)**

(54) **Procédé et système d'authentification de cartes à mémoire électronique.**

(57) Ce procédé permet l'authentification des cartes à mémoire électronique susceptibles d'autoriser la fourniture d'une prestation après traitement par une machine.

La mémoire de la carte comporte au moins trois zones ($Z_1$, $Z_2$, $Z_3$) dont la première ($Z_1$) accessible en lecture, contient des informations (I), ainsi que leur signature (S) obtenue grâce à des données secrètes (D) enregistrées dans la troisième zone ($Z_3$), interdite à la lecture. La seconde zone ($Z_2$), accessible en lecture, contient le résultat d'un codage à clef secrète et à clef publique de l'ensemble des données de la première zone.

Le procédé conduit à une protection efficace contre plusieurs types de fraude.

FIG.2

| I | S | Z1 |
| I' | S' | Z2 |
| D | | Z3 |
| | | Z4 |

EP 0 299 826 A1

**Description**

## PROCEDE ET SYSTEME D'AUTHENTIFICATION DE CARTES A MEMOIRE ELECTRONIQUE

La présente invention concerne un procédé d'authentification de cartes à mémoire électronique et un système pour la mise en oeuvre dudit procédé.

Plus précisément l'invention concerne un procédé et un système dans lequel une carte à mémoire électronique est délivrée par un organisme prestataire de services à un usager pour que celui-ci puisse recevoir ces services, dans des limites prévues à l'avance, en introduisant sa carte dans des machines de fourniture desdits services, ces machines comportant un dispositif pour le transfert d'informations entre les circuits de la carte et le dispositif et le traitement de ces informations pour autoriser ou non la fourniture du service.

Il faut évidemment que la carte comporte en mémoire des informations permettant de s'assurer que la carte donne bien droit à la fourniture des services souhaités et/ou que l'usager a bien le droit d'utiliser cette carte pour obtenir un service. En d'autres termes il faut que la carte et éventuellement le dispositif de transfert de la machine comportent des informations pour authentifier la carte.

Le système le plus simple d'authentification consiste à prévoir dans la mémoire de la carte une zone accessible en lecture mais interdite d'accès en écriture qui comporte une ou plusieurs informations d'authentification de la carte.

L'inconvénient d'une telle carte réside dans le fait qu'en recopiant dans une carte vierge les informations d'authentification, le fraudeur pourra disposer d'une carte ayant les mêmes possibilités qu'une carte "authentique".

Pour rendre plus sûr la procédure d'authentification, on a proposé dans le brevet français 2.469.760 de baser l'authentification sur une information secrète mémorisée de façon inaccessible depuis l'extérieur dans la carte et dans la machine de traitement. La carte ainsi que la machine comporte des moyens de calcul qui peuvent mettre en oeuvre un même algorithme faisant intervenir l'information secrète. Si la mise en oeuvre de l'algorithme par la carte et par la machine donne des résultats identiques la carte est considérée comme authentique.

L'inconvénient d'un tel système est que l'information secrète doit être mémorisée dans la machine de traitement des cartes. Il suffit donc qu'un fraudeur arrive à connaître l'information secrète commune à toutes les cartes pour pouvoir fabriquer, à partir de cartes vierges, autant de cartes "authentiques" qu'il le souhaite.

Un objet de l'invention est de fournir un procédé et un sytème d'authentification de cartes à mémoire électronique qui permettent d'améliorer la sécurité de l'authentification.

Pour atteindre ce but le procédé d'authentification de cartes à mémoire électronique destinées à être introduites dans des machines de traitement par des usagers pour obtenir des prestations si la carte est authentique, se caractérise en ce qu'il comporte les étapes suivantes :

a) on définit dans la mémoire de ladite carte une première et une deuxième zones libres en lecture et protégées en écriture, et une troisième zone de mémore interdite en lecture et protégée en écriture;

b) avant la délivrance de la carte à l'usager, on inscrit dans ladite première zone de la mémoire des premières informations, et on inscrit dans ladite troisième zone au moins une donnée secrète; on élabore une signature desdites premières informations par mise en oeuvre d'un premier algorithme non secret faisant intervenir ladite donnée secrète et on inscrit ladite signature dans ladite première zone de mémoire, ladite signature et lesdites premières informations formant des deuxièmes informations et, par mise en oeuvre d'un deuxième algorithme du type à clé publique et à clé secrète, on code à l'aide de la clé secrète lesdites deuxièmes informations et on les inscrits dans ladite deuxième zone ce qui donne des troisièmes informations ; et

c) lorsque l'usager introduit sa carte dans une machine de traitement, on décode à l'aide de ladite clé publique lesdites troisièmes informations et on les compare auxdites deuxièmes informations ; et, si les troisièmes informations décodées correspondent aux deuxièmes informations, on calcule dans ladite carte à l'aide de ladite donnée secrète par mise en oeuvre dudit premier algorithme la signature desdites premières informations et on compare ladite signature calculée à ladite signature mémorisée dans ladite première zone de mémoire.

Le système d'authentification de cartes à mèmoire électronique comprenant au moins une carte à mémoire électronique et au moins une machine de traitement dans laquelle ladite carte peut être introduite et des moyens pour permettre l'échange d'informations entre ladite machine et ladite carte, se caractérise en ce que :

Ladite carte comporte :

Une première zone de mémoire libre en lecture et protégée en écriture dans laquelle sont mémorisées des premières informations et une signature formant ensemble des deuxièmes informations;

Une deuxième zone de mémoire libre en lecture et protégé en écriture dans laquelle sont mémorisées des troisièmes informations, lesdites troisièmes informations résultant du codage desdites deuxièmes informations par un deuxième algorithme à clé publique et à clé secrète ;

Une troisième zone de mémoire interdite en lecture et protégée en écriture dans laquelle est mémorisée au moins une donnée secrète ;

Des circuits de traitement pour traiter les informations contenues dans lesdites zones de mémoire et des informations venant de ladite machine de traitement ;

Ladite machine comportant :

Des moyens de traitement d'informations et des moyens de mémorisation d'informations ; et

Ledit système comprenant :

Des moyens pour calculer la signature desdites premières informations à partir de ladite donnée secrète par mise en oeuvre d'un premier algorithme ; des moyens pour décoder à l'aide de ladite clé publique lesdites troisièmes informations ; des premiers moyens pour comparer lesdites troisièmes informations décodées auxdites deuxièmes informations; des moyens, en réponse aux premiers moyens de comparaison, pour calculer la signature desdites premières informations à l'aide de ladite donnée secrète par mise en oeuvre d'un premier algorithme public, et des deuxièmes moyens de comparaison pour comparer ladite signature calculée à la signature mémorisée dans ladite première zone de mémoire.

De préférence ladite clé publique et les moyens de mise en oeuvre dudit code à clé publique et à clé secrète sont mémorisés dans ladite machine de traitement, et en ce que lesdits moyens de mise en oeuvre dudit premier algorithme sont mémorisés dans la carte.

On comprend qu'ainsi ni la clé secrète du code à clé secrète et à clé publique, ni la donnée secrète associée au premier algorithme ne sont accessibles à un fraudeur puisque

la clé secrète est utilisée seulement par le prestataire de services lors de l'initialisation de la carte et que la ou les données secrètes qui sont mémorisées dans la carte sont protégées en lecture.

De plus il n'est pas possible de dupliquer toutes les informations contenues dans la mémoire puisque la troisième zone de mémoire est inaccessible en lecture depuis l'extérieur de la carte. Dans cette situation si le fraudeur, après avoir recopié dans une carte vierge les informations contenues dans les deux premières zones de mémoire, introduisait des données secrètes au hasard dans la troisième zone de la mémoire, le calcul de la signature serait erroné lors de l'utilisation de la carte.

En outre, du fait que le fraudeur ne connait pas la donnée secrète de l'algoritme il ne peut frauder en recopiant les premières informations de la première zone de mémoire en introduisant au hasard une donnée secrète dans la troisième zone et en calculant la signature à partir de la donnée secrète introduite au hasard puisqu'il ne pourra pas élaborer dans la deuxième zone de mémoire les informations correspondantes ignorant la clé secrète du code à clé publique et à clé secrète.

Pratiquement la seule solution pour frauder serait de connaître, pour une carte donnée, la donnée secrète.

On comprend que cela peut être aisément évité en écrivant dans la troisième zone de mémoire la donnée secrète directement à partir d'un générateur de nombres aléatoires, ou même de prévoir deux ou plus de deux données secrètes qui seraient introduites séparément par des générateurs de nombres aléatoires distincts.

D'autres caractérisques et avantages de l'invention apparaitront plus clairement à la lecture de la description qui suit de un mode de mise en oeuvre de l'invention. La description se réfère au dessin annexé sur lequel :

La figure 1 ist un schéma montrant un système d'authentification comprenant une machine de traitement et une carte à mémoire ;

La figure 2 est un schéma montrant l'organisation de la mémoire programmable d'une carte à mémoire ; et

La figure 3 est un organigramme de fonctionnement du système d'authentification selon l'invention.

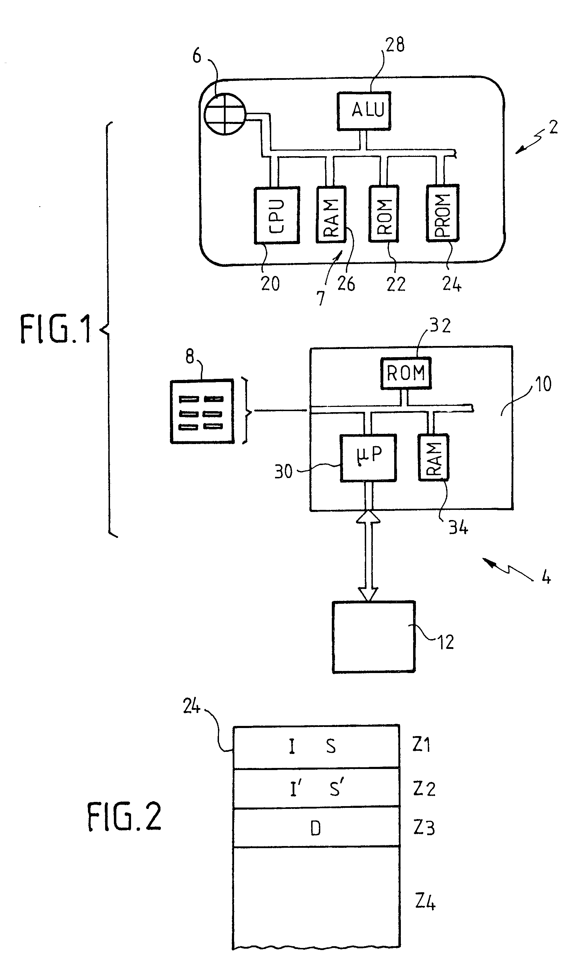

En se référant aux figures 1, 2 et 3 on va décrire un mode préféré de réalisation de l'invention.

Le système de l'invention comprend essentiellement des cartes à mémoire électronique telles que 2 et des machines de traitement de cartes telles que 4.

Les cartes à mémoire électroniques sont bien connues. Elles se composent d'un corps en matériau plastique muni sur une de ses faces de plages de contact externes référencées 6 sur la figure 1. Les plages de contact 6 sont reliées électriquement à un circuit électronique 7 formé dans une pastille piézoélectrique noyée dans le corps de la carte. La demande de brevet français 83.09558 décrite la structure d'une telle carte.

La machine de traitement de cartes 4 comprend un lecteur de cartes représenté schématiquement sur la figure 1 par des contacts électriques 8, un ensemble de circuits de traitement 10 et un ensemble 12 de fourniture de prestations controlé par les circuits de traitement 8. La partie de la machine formant le lecteur de cartes est en soi bien connu. Un tel lecteur est par exemple décrit dans les demendes de brevet français n° 83.17135 et 83.17242. Pour la description de la présente invention il suffit d'indiquer que, lorsque la carte 2 est introduite dans le lecteur 8, les plages de contact 6 de la carte sont électriquement connectées aux contacts électriques du lecteur 8. Ainsi les circuits de traitement 8 de la machine de traitement 4 peuvent échanger des informations avec le circuit électronique 7 de la carte 2. La liaison électrique entre le lecteur 8 et la carte 2 permet de plus, en général, d'alimenter les circuits 7 de la carte, et éventuellement d'appliquer aux circuits de la carte une tension d'écriture.

Un système complet de fourniture de prestations ou de services comprend bien sûr une pluralité de machines de traitement 4 qui sont toutes sensiblement identiques, et une pluralité de cartes à mémoire électronique 2, chaque carte étant détenue par un usager désirant obtenir les prestations ou services fournis par le système.

Les circuits électroniques 7 de la carte 2 sont en soi bien connus. Il s'agit d'une carte dite à microprocesseur. Les circuits 7 comprennent essentiellement une unité de traitement 20 ou CPU, une mémoire morte de programme 22, une mémoire non volatile programmable 24, par exemple une mémoire PROM ou une mémoire EPROM, une mémoire de travail 26 qui est par exemple une RAM, et une unité arithmétique et logique 28 ou ALU. Une telle organisation est en soi bien connue et on n'en décrira ultérieurement que le mode de fonctionnement.

Les circuits de traitement 8 de la machine 4 de fourniture de services comprennent essentiellement, reliés au lecteur 8, un microprocesseur 30, une ou plusieurs mémoires de programme 32, constituées par exemple par des ROM, et une mémoire de travail 34 contituée par exemple par une RAM.

En se référant maintenant à la figure 2, on va décrire l'organisation de la mémoire programmable non volatile 24 de la carte 2. La mémoire 24 comporte trois zones spécialisées $Z_1$, $Z_2$, et $Z_3$ utilisées lors de la procédure d'authentification, et une zone $Z_4$ servant par exemple à l'inscription des soldes successifs de la carte à la suite des fournitures successives de prestation. Par zone de mémoire $Z_1$, $Z_2$, et $Z_3$ il faut aussi bien entendre des zones physiquement distinctes et repérées de la mémoire, que des fichiers prévus dans cette mémoire et gérés par la CPU 20 de la carte.

Avant de décrire en détails le fonctionnement du système de fourniture de services selon l'invention, on va en décrire le principe.

La mise en oeuvre de chaque carte dans ce système comporte une phase d'initialisation de la carte et des phases successives d'utilisation normale de la carte.

Lors de la phase d'initialisation, l'organisme qui délivre les cartes aux usagers, va procéder à l'enregistrement de certaines informations dans les zones de mémoire $Z_1$ à $Z_3$ de la mémoire 24 de chaque carte. Dans une première phase on inscrit dans la zone $Z_3$ de la mémoire une ou plusieurs données secrètes D, et on inscrit dans la zone $Z_1$ des premières informations I non secrètes. Ces informations I qui doivent être lues par les machines de traitement consistent par exemple dans des informations nécessaires à la reconnaissance de la carte par les machines de traitement. Il s'agit par exemple, d'un numéro de série, du type de prestations que la carte permet d'obtenir, de dates limites de validité etc.... La ou les données secrètes D peuvent être introduites par le fabriquant de la carte à l'aide d'un ou de plusieurs générateurs de nombres aléatoires. Ainsi personne ne peut connaître la valeur de la donnée secrète D ou des données secrètes inscrites dans la zone $Z_3$.

Ensuite la zone $Z_3$ est interdite en lecture depuis l'extérieur de la carte et interdite en écriture. Dans une deuxième phase de l'initialisation de la carte, par mise en oeuvre d'un premier algorithme non secret ALG, on calcule une signature S des premières informations I contenues dans la zone $Z_1$ de mémoire. La mise en oeuvre de l'algorithme ALG fait intervenir la ou les données secrètes. En conséquence il est impossible ou quasi-impossible de calculer la signature S des informations I sans connaître la ou les données secrètes D. La signature S est alors incrite également dans la zone $Z_1$ qui est ensuite interdite en écriture mais libre en lecture.

La troisième phase d'initialisation fait intervenir un algorithme de codage à clé publique et à clé secrète. Ce type d'algorithme est en soi bien connu. Le plus connu d'entre eux est le code RSA qui est par exemple décrit dans la demande de brevet français n° 82.20051 publiée le 1er juin 1984. Pour les besoins de la description de la présente invention, il suffit de dire que le codage d'une information fait intervenir une clé secrète $C_1$, alors que le décodage de l'information fait intervenir une clé publique $C_2$. En d'autres termes il est toujours possible de décoder une information, mais il est impossible de coder cette information sauf à connaître la clé secrète $C_1$. Dans cette troisième phase, l'organisme qui délivre les cartes, code à l'aide de sa clé secrète $C_1$, par mise en oeuvre d'un codage à clé secrète et à clé publique, les premières informations I et la signature S contenues dans la zone $Z_1$ de mémoire, et ces informations codées I' et S', ou "troisièmes informations", sont inscrites dans la deuxième zone de mémoire $Z_2$. La zone $Z_2$ est ensuite interdite en écriture, mais elle reste libre en lecture.

La carte est ainsi initialisée et elle peut être remise à un usager pour la fourniture de services. Elle comprend dans la première zone de mémoire $Z_1$, interdite en écriture, les deuxièmes informations constituées par les premières informations I et par la signature S. La deuxième zone de mémoire $Z_2$ qui est également interdite en écriture contient les troisièmes informations S' et I' qui résultent du codage par clé publique et clé secrète des deuxièmes informations. Enfin la troisième zone de mémoire $Z_3$ qui est interdite en écriture et interdite en lecture depuis l'extérieur contient la ou les données secrètes D.

Lorsqu'un usager veut obtenir un service, il introduit sa carte dans la machine de traitement. Celle-ci lit les troisièmes informations S' et I' contenues dans la zone $Z_2$ de la mémoire de la carte et, à l'aide de la clé publique $C_2$, décode ces informations. Les informations décodées sont comparées aux informations contenues dans la zone $Z_1$ de la mémoire. S'il y a correspondance entre ces deux groupes d'informations la première condition d'authentification est satisfaite. Puis dans la carte même, on calcule la signature S' des informations I de la zone $Z_1$ de mémoire par la mise en oeuvre de l'algorithme ALG faisant intervenir la ou les données secrètes D mémorisées dans la zone $Z_3$ de mémoire. S'il y a correspondance entre la signature calculée S' et la signature S mémorisée dans la zone $Z_1$ la carte est considérée comme authentique et l'usager pourra obtenir la prestation souhaitée.

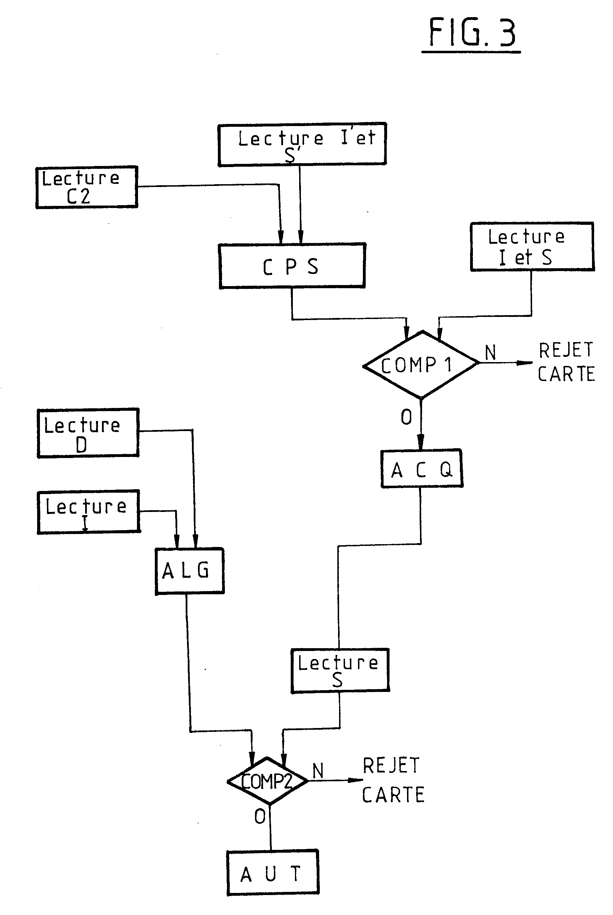

En se référant plus particulièrement aux figures 1 et 3 on va décrire plus en détails le système d'authentification selon l'invention.

Si l'on revient à la figure 1 et plus précisément à la mémoire de programme 22 de la carte, elle comprend pour ce qui concerne l'authentification un sous-programme ALGP pour la mise en oeuvre de l'algorithme non secret ALG. Le sous-programme ALGP contient les paramètres de l'algorithme, les instructions de calcul mises en oeuvre par la CPU 20, l'ALU 28 et la mémoire de travail 26, ainsi que les instructions pour lire la valeur de la donnée secrète D mémorisée dans la zone $Z_3$ de la mémoire 24. La mémoire 22 contient également un sous-programme PROT qui permet, sous le contrôle de la CPU, de gérer les conditions d'accès des zones de mémoire $Z_1$, $Z_2$ et $Z_3$. C'est ce sous-programme, en soi connu, qui autorise l'écriture dans les zone $Z_1$, $Z_2$ et $Z_3$ lors de la phase d'initialisation et qui interdit ensuite l'écriture dans ces zones. Le sous-programme PROT interdit également en lecture depuis l'extérieur la zone de mémoire $Z_3$.

Dans le cas où la mémoire 24 est de plus électriquement effaçable, les zones de mémoire $Z_1$, $Z_2$ et $Z_3$ peuvent être de plus protégées en effacement. Cela peut être obtenu, par exemple en modifiant le sous programme PROT.

Si l'on se réfère à la mémoire de programme 32 de la machine de traitement 4, celle-ci contient également un certain nombre de sous-programmes ou de données. Elle contient la clé publique $C_2$ de l'algorithme de codage à clé publique et à clé secrète, le sous programme CPS de mise en oeuvre du codage à clé publique et à clé secrète, un premier sous-programme de comparaison COMP1 et un deuxième sous-programme de comparaison COMP2. Le sous programme CPS comprend des instructions pour lire les troisièmes informations de la zone de mémoire $Z_2$, des instructions de mise en oeuvre de l'algorithme à clé publique et à clé secrète proprement dit, et des instructions de lecture de la clé publique $C_2$. Le sous programme COMP1 commande la lecture des deuxièmes informations I et S contenues dans la zone de mémoire Z1, la comparaison des informations I et S avec les informations décodées par le sous-programme CPS et l'émission d'une instruction d'acquittement ACQ s'il y a identité ou plus généralement correspodnance entre les deux ensembles d'informations. Le sous-programme COMP2 est déclenché par l'émission de l'instruction ACQ et il comprend les instructions pour lire dans la carte la valeur de la signature calculée par la mise en oeuvre du sous-programme ALGP, pour lire dans la zone $Z_1$ la signature S, et pour comparer les deux informations lues dans la carte, et enfin une instruction AUT qui est délivrée s'il y a identité ou plus généralement correspondance entre les deux valeurs lues.

On va maintenant décrire plus en détails le fonctionnement du système lorsqu'un usager veut obtenir une prestation.

Lorsque celui-ci a introduit sa carte 2 dans le lecteur 8 de la machine, le sous programme CP5 stocké dans la mémoire 32 se déroule. Le circuit de traitement 7 lit dans la zone $Z_2$ les troisièmes informations, il lit également la clé publique $C_2$ et décode les troisièmes informations. Puis le sous programme COMP1 est mis en route. Il compare les deuxièmes informations préalablement lues dans la zone de mémoire $Z_1$ aux informations décodées. S'il y a coïncidence ou correspondance entre ces deux ensembles d'informations une instruction ACQ est émise. Dans le cas contraire la carte est rejetée.

Simultanément le sous programme ALGP est mis en oeuvre dans la carte par la CPU 20 et l'ALU 28. Par ce sous programme les premières informations I et la donné secrète D sont lues et l'algorithme ALG est appliqué aux informations I. Le sous programme ALFP calcule ainsi une signature S″ qui est mémorisée temporairement dans la mémoire 26.

Si une instruction ACQ a été émise le sous programme COMP2 stocké dans la mémoire 32 est mis en oeuvre. La signature s″ est lue dans la mémoire 26 et la signature S est lue dans la zone $Z_1$

de la mémoire 24. Le sous-programme compare les signatures S et S″. S'il y a coïncidence, ou plus généralement correspondance, entre les deux signatures le circuit 7 de la machine de traitement 4 émet un signal d'authentification AUT. Dans ce cas l'usager pourra obtenir la prestation souhaitée dans les conditions habituelles. S'il n'y a pas correspondance la carte est rejetée.

Il découle de la description détaillée précédente que l'on obtient effectivement le degré de sécurité dans l'authentification décrit précédemment même si le fraudeur parvient à accéder à l'ensemble des informations ou instructions mémorisées dans les circuits de la machine de traitement.

En outre, on constate que l'authentification est obtenue sans que l'usager est à mémoriser un numéro personnel d'identification. Il va cependant de soi que le système d'authentification selon l'invention pourrait être combiné avec une procédure de reconnaissance d'un code personnel mémorisé de façon inacessible dans la carte et introduit dans la machine de traitement par l'usager à chaque fois qu'il veut se servir de sa carte.

## Revendications

1. Procédé d'authentification de cartes à mémoire électronique destinées à être introduites dans des machines de traitement par des usagers pour obtenir des prestations si la carte est authentique, caractérisé en ce qu'il comporte les étapes suivantes:

a) on définit dans la mémoire de ladite carte une première et une deuxième zone libres en lecture et protégées en écriture, et une troisième zone de mémoire interdite en lecture et protégée en écriture;

b) avant la délivrance de la carte à l'usager, on inscrit dans ladite première zone de la mémoire des premières informations, et on inscrit dans ladite troisième zone au moins une donnée secrète ; on élabore une signature desdites premières informations par mise en oeuvre d'un premier algorithme non secret faisant intervenir ladite donnée secrète et on inscrit ladite signature dans ladite première zone de mémoire, ladite signature et lesdites premières informations formant des deuxièmes informations et par mise en oeuvre d'un deuxième algorithme du type à clé publique et à clé secrète, on code à l'aide de la clé secrète lesdites deuxièmes informations et on les inscrits dans ladite deuxième zone ce qui donne des troisièmes informations et,

c) lorsque l'usager introduit sa carte dans une machine de traitement, on décode à l'aide de ladite clé publique lesdites troisièmes informations et on les compare auxdites deuxièmes informations ; et, si les troisièmes informations décodées correspondent aux deuxièmes informations, on calcule dans ladite carte à l'aide de ladite donnée secrète par mise en oeuvre dudit premier algorithme la signature desdites premières informations et on compare ladite signature calculée à ladite signature de ladite première zone de mémoire.

2. Système d'authentification de cartes à mémoire électronique comprenant au moins une carte à mémoire électronique et au moins une machine de traitement dans laquelle ladite carte peut être introduite et des moyens pour permettre l'échange d'informations entre ladite machine et ladite carte, caractérisé

en ce que Ladite carte comporte :
Une première zone de mémoire libre en lecture et protégée en écriture dans laquelle sont mémorisées des premières informations et une signature formant ensemble des deuxièmes informations ;
Une deuxième zone de mémoire libre en lecture et protégé en écriture dans laquelle sont mémorisées des troisièmes informations, lesdites troisièmes informations résultant du codage desdites deuxièmes informations par un deuxième algorithme à clé publique et à clé secrète ;
Une troisième zone de mémoire interdite en lecture et protégée en écriture dans laquelle est mémorisée au moins une donnée secrète ;
Des circuits de traitement pour traiter les informations contenues dans lesdites zones de mémoire et des informations venant de ladite machine de traitement ;
en ce que ladite machine comporte :
Des moyens de traitement d'informations et des moyens de mémorisation d'informations ; et
en ce que ledit système comprend :
Des moyens pour calculer la signature desdites premières informations à partir de ladite donnée secrète par mise en oeuvre d'un premier algorithme ; des moyens pour décoder à l'aide de ladite clé publique lesdites troisièmes informations ; des premiers moyens pour comparer lesdites troisièmes informations décodées auxdites deuxièmes informations ; des moyens, en réponse aux premiers moyens de comparaison, pour calculer la signature desdites premières informations à l'aide de ladite donnée secrète par mise en oeuvre d'un premier algorithme public, et des deuxièmes moyens de comparaison pour comparer ladite signature calculée à la signature mémorisée dans ladite première zone de mémoire.

3. Système selon la revendication 2, caractérisé en ce que ladite clé publique et les moyens de mise en oeuvre dudit code à clé publique et à clé secrète sont mémorisés dans ladite machine de traitement, et en ce que lesdits moyens de mise en oeuvre dudit premier algorithme sont mémorisés dans la carte.

4. Système selon l'une quelconque des revendications 2 et 3, caractérisé en ce que lesdits premiers et deuxièmes moyens de comparaison sont disposés dans la machine de traitement.

Système selon l'une quelconque des revendications 2 à 4 caractérisé en ce que ledit code à clé publique et à clé secrète est un code RSA.

0299826

FIG.1

FIG.2

0299826

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 030 381  (GREY LAB. ESTABLISHMENT)<br>* En entier *<br>--- | 1-5 | G 07 F    7/10<br>G 07 F    7/08 |
| A | EP-A-0 147 337  (CII-HONEYWELL-BULL)<br>* Résumé; revendications 1,9,11; page 6, ligne 16 - page 7, ligne 11 *<br>--- | 1-5 | |
| A | US-A-4 211 919  (UGON)<br>* Résumé; colonne 1, ligne 58 - colonne 2, ligne 3; revendications 1-3 *<br>--- | 1,2,4 | |
| A | US-A-4 094 462  (MOSCHNER)<br>* Résumé; colonne 1, ligne 47 - colonne 2, ligne 25; colonne 4, ligne 48 - colonne 6, ligne 9 *<br>--- | 1-4 | |
| A | FR-A-2 536 928  (ETAT FRANCAIS)<br>* En entier *<br>----- | 1,3,5 | |

DOMAINES TECHNIQUES
RECHERCHES (Int. Cl.4)

G 07 F

Le présent rapport a été établi pour toutes les revendications

| Lieu de la recherche | Date d'achèvement de la recherche | Examinateur |
|---|---|---|
| LA HAYE | 18-10-1988 | GUIVOL,O. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
....................................................................
& : membre de la même famille, document correspondant